(19) Europäisches Patentamt
European Patent Office
Office européen des brevets

(11) **EP 4 772 315 A1**

(12) **EUROPEAN PATENT APPLICATION**
published in accordance with Art. 153(4) EPC

(43) Date of publication:
**08.07.2026 Bulletin 2026/28**

(21) Application number: **24857466.7**

(22) Date of filing: **11.07.2024**

(51) International Patent Classification (IPC):
***B25J 15/08*** *(2006.01)*

(52) Cooperative Patent Classification (CPC):
**B25J 15/08**

(86) International application number:
**PCT/JP2024/025154**

(87) International publication number:
**WO 2025/047143 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 JP 2023139701**

(71) Applicant: **Creative Technology Corporation
Kawasaki-shi, Kanagawa 213-0034 (JP)**

(72) Inventor: **KANEKO, Daiki
Kawasaki-shi, Kanagawa 213-0034 (JP)**

(74) Representative: **Vossius & Partner
Patentanwälte Rechtsanwälte mbB
Siebertstraße 3
81675 München (DE)**

(54) **WORKPIECE GRIPPING DEVICE**

(57)    To provide a workpiece gripping device capable of highly reliably and efficiently gripping a workpiece even when the workpiece has a three-dimensional shape.

A workpiece gripping device configured to grip a workpiece includes a frame-shaped support portion, a flexible and hermetically sealed hollow bag body attached to one surface of the frame-shaped support portion and accommodating, inside the hollow bag body, a material the state of which changes due to a jamming transition, an electrostatic attraction means provided on a contact surface of the hollow bag body with the workpiece and configured to electrostatically attract the workpiece, and a shape maintaining means configured to deform and maintain the shape of the hollow bag body in conformity with the shape of the workpiece, the frame-shaped support portion and the hollow bag body each have at least a non-contact region where the frame-shaped support portion and the hollow bag body are not in contact with each other, the hollow bag body is attached to one surface of the frame-shaped support portion in such a manner that, and during use, the workpiece is pressed against the contact surface of the hollow bag body with the workpiece and is gripped and attracted by utilizing shape maintaining due to the jamming transition and the electrostatic attraction.

[FIGURE 2]

## Description

Technical Field

The present invention relates to a workpiece gripping device for gripping a workpiece to be gripped (hereinafter simply referred to as "workpiece").

Background Art

In assembly factories, manufacturing factories, and the like, a robot (also referred to as robotic arm or robot manipulator) including a robot hand (also referred to as end effector or the like), which includes a mechanically-operated gripping mechanism and is attached to the tip of the robot, has conventionally been used to grip and lift articles when the articles are transferred or conveyed. End effectors such as robot hands mainly rely on a way of grasping by a mechanical feature that imitates movement of claws, fingers, and the like depending on actual tasks as well as the shape, hardness, and material of a workpiece, and the like.

Recently, there is a demand for performing gripping, transfer, or conveyance of items one by one by using the same end effector even when not only substantially identical articles but also various kinds of items having various materials, sizes, shapes, and weights are in mixture. Furthermore, even in the same production line, there is a demand for efficiently gripping such items without causing any loss in terms of time and labor incurred by sorting or the like and without need for facility modification.

In response to such demands, a method has been developed in which a mechanism capable of changing the rigidity of a portion that grips a workpiece is mounted on an end effector in order to improve the fitting property to the three-dimensional shape of an article, in particular. As a method for achieving this, a gripper device utilizing a jamming transition has been employed. With the gripper device, a bag body in which a powder granular material is sealed is pressed against a workpiece in a soft state to conform to the shape of the workpiece, and in this state, the inside is switched a hard state by utilizing a jamming transition of the powder granular material, and then the bag body maintains its wrapping shape to grip the workpiece.

For example, Patent Literature 1 discloses an attraction gripper utilizing a jamming transition, in which, in order to address the problems of conventional attraction-type robot hands and shape-adaptable airbags or the problems of conventional grippers utilizing a jamming transition, a hollow bag as a contact portion with a workpiece is formed in a hemispherical shape, thereby eliminating portions not involved in gripping and improving the structure to be more efficient.

Patent Literature 2 discloses an attraction gripper including, as illustrated in Figure 3, for example, a fixation member 1 having a hole 7, a gripping portion 2 disposed with the hole 7 interposed therebetween such that its inside is coupled in the center axial direction of the hole 7, the gripping portion 2 including a plurality of flexible and hermetically sealed bag-shaped portions 2a and 2b filled with a powder or granular material 8 and a fluid, and a hardening means 3 for hardening the plurality of bag-shaped portions 2a and 2b, and the attraction gripper is used by pressing one of the plurality of bag-shaped portions 2a and 2b against a workpiece. Since the attraction gripper of Patent Literature 2 includes the gripping portion 2 including the plurality of bag-shaped portions 2a and 2b, the attraction gripper can grip various kinds of objects by increasing the deformable capacity of the bag-shaped portions.

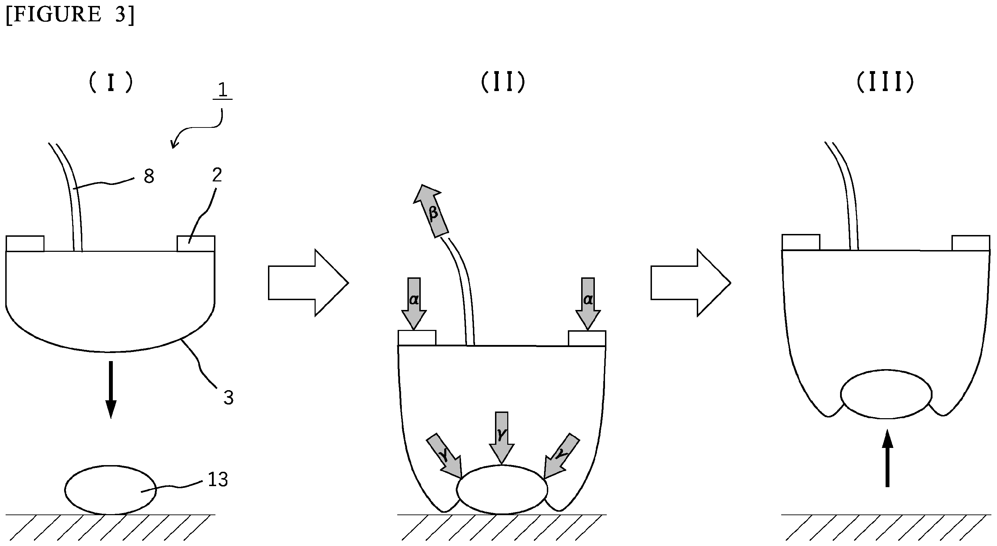

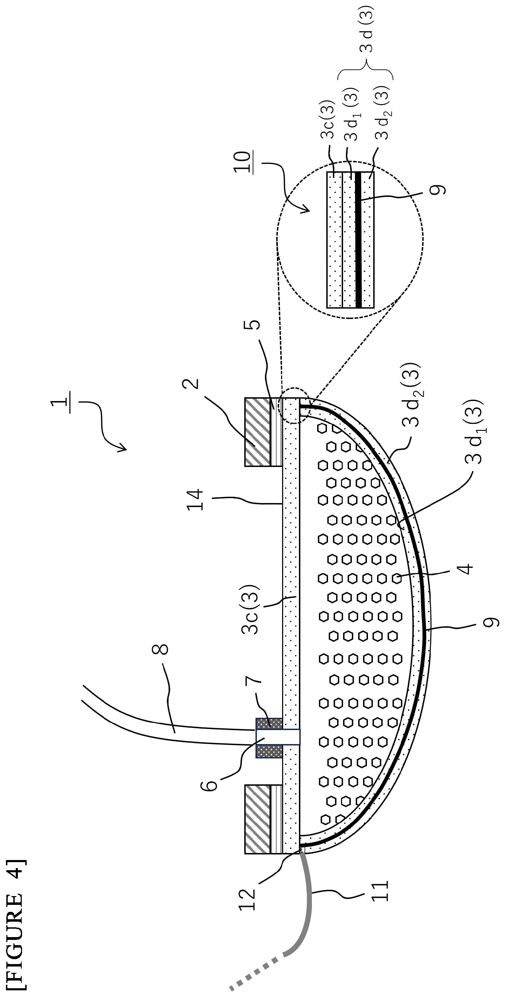

Patent Literature 3 discloses a shape-adaptive electro-adhesive gripper for picking up irregularly shaped objects. As illustrated in Figures 3 and 4, for example, the gripper includes a body 110 and an electro-adhesive module 120, the body 110 includes a flexible film 113 at a base 111 having a port 115, the flexible film 113 can change its rigidity to deform in conformity with the shape of a target workpiece, and thereafter fix the deformed shape, and the inside may be filled with a filler such as small particles. The electro-adhesive module 120 is formed of an electrorheological elastomer including a polarizable dielectric material inside an elastomer material and can pick up, with electric field application, a workpiece by utilizing deformation in accordance with the shape of the workpiece due to rigidity change, and generated electrostatic force.

Citation List

Patent Literature

[Patent Literature 1] JP2012-236240 A
[Patent Literature 2] JP2021-065977 A
[Patent Literature 3] U.S. Unexamined Patent Application Publication No. 2020/0023527

# EP 4 772 315 A1

Summary of Invention

Technical Problem

As described above, the method disclosed in Patent Literature 1 has several advantages in that, as compared to a conventional gripper device utilizing a jamming transition, it has an efficient structure in which inefficient portions not involved in gripping are eliminated by forming the hollow bag in a hemispherical shape, it still has problems as follows.

Specifically, in the gripper device of Patent Literature 1, as understood from Figure 3 (B) or the like, the upper end of a gripping portion (reference numeral: 12) including the hollow bag is attached in close contact over the entire surface to a fixation member (reference numeral: 11) in order to effectively utilize pressing force on a pressure receiving surface so that the hollow bag conforms well to the shape of a workpiece. In this manner, since the gripping portion (hollow bag) is attached over the entire surface to the fixation member, an upper portion of the bag portion is pulled and contracts when the inside of the bag is depressurized (suctioned) to cause a jamming transition, and as a result, the bag may separate from the workpiece, or accordingly, close contact (fitting property) between the bag and the workpiece may be impaired. Furthermore, since the fixation member is disposed on the entire surface of the hollow bag, deformation (movement) of the bag on the fixation member side, in particular, is restricted when the hollow bag is pressed against the workpiece, and as a result, the deformation amount (amount of sinking into or wrapping around the workpiece) of the bag may decrease, and close contact (fitting property) with the workpiece may decrease. Accordingly, reliable gripping of the workpiece is potentially impaired.

Since the attraction gripper of Patent Literature 2 includes the gripping portion 2 including the plurality of bag-shaped portions 2a and 2b with the hole 7 of the fixation member 1 interposed therebetween, the deformable capacity of the bag-shaped portions can be increased, whereas the fixation member 1 is provided so as to contact side surfaces of the bag-shaped portions, and thus there is a concern that pressing force of the bag-shaped portions on a workpiece may be insufficient, and the degree of deformation and close contact (fitting property) of the bag-shaped portions to the workpiece may be insufficient. Furthermore, deformation of the bag-shaped portions with respect to the workpiece may be suppressed depending on the filling amount of powder or the like with which the bag-shaped portions are filled, whereas as the hole 7 is larger, the filler is more likely to accumulate on the lower side of the bag-shaped portions and the deformation suppression becomes significant, which leads to a similar concern that deformation of the bag-shaped portions with respect to the workpiece or the like may be insufficient.

In the shape-adaptive electro-adhesive gripper of Patent Literature 3, as understood from Figure 3 or the like, since the entire surface of the base 111 is attached to the flexible film 113, deformation (movement) of the flexible film 113 is restricted when the gripper is pressed against a workpiece, as in the case of Patent Literature 1, and thus there is a concern that the deformation amount (amount of sinking into or wrapping around the workpiece) of the film with respect to the workpiece becomes small. Similarly, since the electro-adhesive module 120 is in contact with the flexible film 113 over the entire surface, there is a concern that deformation (movement) of the electro-adhesive module 120 with respect to the workpiece is restricted when the gripper is pressed against a workpiece. In addition to such points, since the electrorheological elastomer used as the electro-adhesive module 120 employs a particular inorganic material such as $BaTiO_3$, it is expensive and has low practicality. Furthermore, in terms of usage form and characteristics, the elastomer material used as the electro-adhesive module 120 is a polymer material such as natural rubber or silicone, which has a relatively low dielectric constant and is less likely to generate static electricity, and thus generation of electrostatic force is easily encumbered. Moreover, in order to generate strong electrostatic force, it is needed to disperse a large amount of inorganic material, which increases the hardness of the electro-adhesive module 120, making it likely that the fitting property and pickup property for a workpiece is lost. In addition, when such an inorganic material is used, merely mixing the inorganic material as powder results in an amorphous state and dielectric properties are not sufficiently exhibited, and thus the inorganic material usually needs to be sintered for crystallization, whereas there is a concern that the use of the crystallized inorganic material increases the hardness of the electro-adhesive module 120 and the fitting property and pickup property with respect to the workpiece are likely to be lost. In addition, since the electro-adhesive module 120 has such a configuration, considerably high voltage is needed to generate strong electrostatic force, and it is considered that adjustment of the electrostatic force is difficult.

Thus, while partially taking into consideration mechanisms as those described in Patent Literatures 1 to 3, the inventors of the present application intensively studied a workpiece gripping device capable of achieving highly reliable gripping of a workpiece without the above-described concerns, and as a result, accomplished the present invention by conceiving not only to modify the shape of a support portion corresponding to the above-described fixation member but also to utilize electrostatic attraction in combination with a jamming transition. In addition, the inventors also conceived, preferably, to optimize the degree of contact between a hollow bag body, which serves as a contact portion with a workpiece, and the support portion, as well as to optimize the material and the like of the hollow bag body, and more preferably, to optimize a configuration as an electrostatic attraction means.

Thus, an object of the present invention is to provide a workpiece gripping device that achieves highly reliable gripping of a workpiece even when the workpiece has a three-dimensional shape, and enables efficient gripping of the workpiece by reducing changes in the device or the like.

Solution to Problem

Specifically, the gist of the present invention is as follows.

(1) A workpiece gripping device configured to grip a workpiece, the workpiece gripping device including:

a frame-shaped support portion;
a flexible and hermetically sealed hollow bag body attached to one surface of the frame-shaped support portion and accommodating, inside the hollow bag body, a material the state of which changes due to a jamming transition;
an electrostatic attraction means provided on a contact surface of the hollow bag body with the workpiece and configured to electrostatically attract the workpiece; and
a shape maintaining means configured to deform and maintain the shape of the hollow bag body in conformity with the shape of the workpiece, in which
the hollow bag body is attached to one surface of the frame-shaped support portion in such a manner that the frame-shaped support portion and the hollow bag body each have at least a non-contact region where the frame-shaped support portion and the hollow bag body are not in contact with each other, and
during use, the workpiece is pressed against the contact surface of the hollow bag body with the workpiece and is gripped and attracted by utilizing shape maintaining due to the jamming transition and the electrostatic attraction.

(2) The workpiece gripping device according to (1), in which the area of the non-contact region is 30 to 85% relative to the total area of the frame-shaped support portion including the non-contact region.
(3) The workpiece gripping device according to (1), in which at least the contact surface of the hollow bag body with the workpiece is made of a material having a thickness of 10 to 150 μm, a tensile elastic modulus of 10 to 50 MPa, and a tensile elongation of 100 to 1000%.
(4) The workpiece gripping device according to (1), in which at least the contact surface of the hollow bag body with the workpiece is made of one or more materials selected from the group consisting of polyurethane, polyurethane elastomer, soft polyvinyl chloride, polyvinylidene chloride, polyolefin, and polyolefin copolymer.
(5) The workpiece gripping device according to (1), in which the material the state of which changes due to the jamming transition is one or more materials selected from the group consisting of a powder, a granular material, and a fluid.
(6) The workpiece gripping device according to (1), in which the shape maintaining means is a pressure adjusting means configured to adjust pressure inside the hollow bag body, and the inside of the hollow bag body is depressurized by the pressure adjusting means to maintain the shape.
(7) The workpiece gripping device according to (6), in which a ventilation hole is attached to the hollow bag body, and the pressure is adjusted by letting gas in and out through the ventilation hole.
(8) The workpiece gripping device according to any one of (1) to (7), in which the hollow bag body is composed of an upper sheet and a lower sheet, the upper sheet being attached to one surface of the frame-shaped support portion, the lower sheet being attached to one surface of the upper sheet by fusion or bonding, the one surface being opposite to the attached surface, and the lower sheet has a contact surface with the workpiece and includes the electrostatic attraction means.
(9) The workpiece gripping device according to (8), in which

the electrostatic attraction means is an electrostatic chuck, and the lower sheet is an electrostatic chuck sheet including an electrode inside, and
the electrostatic chuck sheet is formed by sequentially stacking and fusing or bonding a first resin film on an inner side of the hollow bag body, an electrode, and a second resin film on an outer side of the hollow bag body, and the second resin film has a contact surface with the workpiece.

(10) The workpiece gripping device according to (9), in which the first resin film and/or the second resin film has a thickness of 10 to 150 μm, a tensile elastic modulus of 10 to 50 MPa, and a tensile elongation of 100 to 1000%.
(11) The workpiece gripping device according to (9), in which the first resin film and/or the second resin film is made of one or more materials selected from the group consisting of polyurethane, polyurethane elastomer, soft polyvinyl chloride, polyvinylidene chloride, polyolefin, and polyolefin copolymer.
(12) The workpiece gripping device according to (9), in which the electrode is composed of a bipolar electrode including a positive electrode and a negative electrode and is an electrode sheet formed of a cured conductive paint and having a thickness of 30 to 100 μm.

(13) The workpiece gripping device according to (12), in which the electrode composed of the bipolar electrode is an electrode formed by meshing comb teeth of a pair of comb-shaped electrodes with each other in the same plane while maintaining a constant spacing.

(14) The workpiece gripping device according to (9), in which the electrostatic chuck sheet has a thickness of 90 to 350 μm, a tensile elastic modulus of 10 to 50 MPa, and a tensile elongation of 100 to 1000%.

Advantageous Effect(s) of Invention

According to a workpiece gripping device of the present invention, it is possible to achieve highly reliable gripping of a workpiece even when the workpiece has a three-dimensional shape. Moreover, it is possible to enable efficient gripping of a workpiece by reducing changes in the device or the like.

Brief Description of Drawings

[Figure 1] Figure 1 is a schematic diagram illustrating an upper surface shape of an example of a workpiece gripping device of the present invention.

[Figure 2] Figure 2 is a cross-sectional view of section A-A of the workpiece gripping device illustrated in Figure 1.

[Figure 3] Figure 3 is a schematic diagram for description of an example of a series of operations in a case where a workpiece is gripped by using the workpiece gripping device of the present invention. (I) is a diagram illustrating a state before the workpiece is gripped, (II) is a diagram illustrating a state in which the workpiece is gripped, and (III) is a diagram illustrating a state in which the workpiece is gripped and lifted up.

[Figure 4] Figure 4 is a cross-sectional view of another example of the workpiece gripping device of the present invention.

[Figure 5] Figure 5 is a schematic diagram illustrating an electrostatic chuck sheet that is an example of an electrostatic attraction means of the workpiece gripping device of the present invention. (Fig. 5A) is a plan view, and (Fig. 5B) is a cross-sectional view of section B-B in (Fig. 5A).

Description of Embodiment(s)

Embodiments of the present invention will be described below with reference to the accompanying drawings as appropriate. The present invention is not limited to the embodiments below, and the embodiments may be changed or combined in various manners without departing from the scope of the present invention. Note that, in the present specification and the drawings, constituent components having the same function in effect are denoted by the same reference numeral, and duplicate description thereof is omitted in some cases.

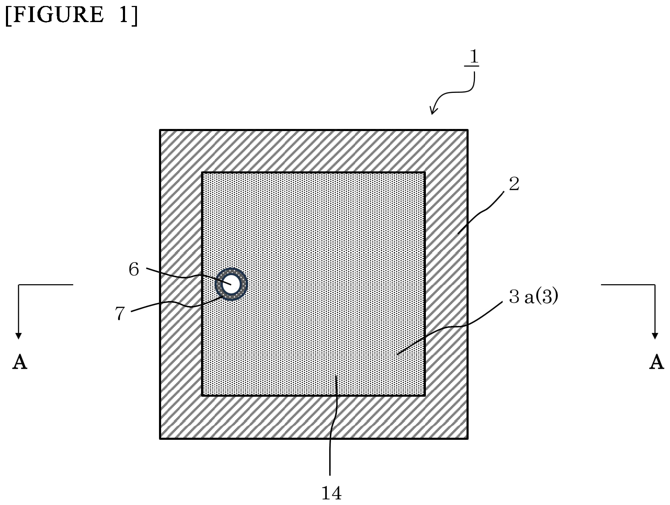

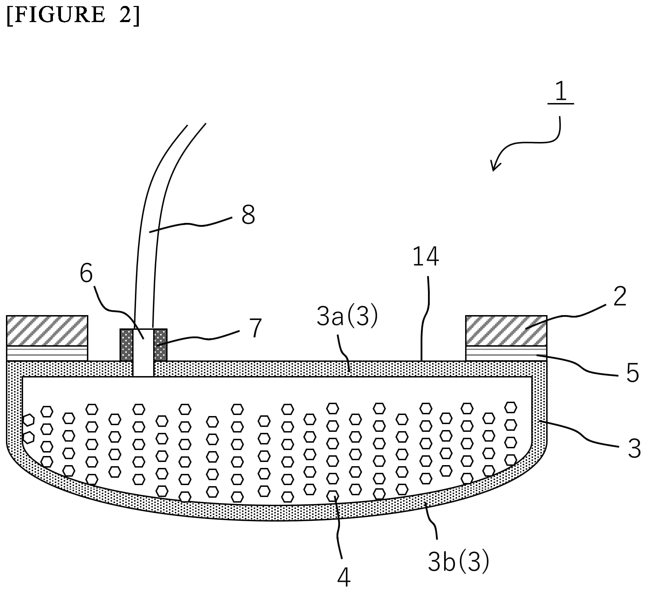

Figures 1 and 2 illustrate an example of a workpiece gripping device of the present invention.

The workpiece gripping device (reference numeral "1"; hereinafter, only numerals are shown, and the same applies to other numerals) of the present invention includes a frame-shaped support portion 2, a flexible and hermetically sealed hollow bag body 3 attached to one surface of the frame-shaped support portion 2 and accommodating, inside the hollow bag body, a material 4 the state of which changes due to a jamming transition, an electrostatic attraction means (not illustrated) provided on a contact surface 3b of the hollow bag body 3 with a workpiece and configured to electrostatically attract the workpiece, and a shape maintaining means (not illustrated) configured to deform and maintain the shape of the hollow bag body in conformity with the shape of the workpiece.

The hollow bag body 3 is attached to the frame-shaped support portion 2 in such a manner that the hollow bag body 3 has at least a non-contact region 14 that is not in contact with the support portion.

Moreover, according to the workpiece gripping device of the present invention, during use, the workpiece can be pressed against the contact surface 3b of the hollow bag body with the workpiece and can be gripped and attracted by utilizing shape maintaining due to the jamming transition and the electrostatic attraction.

<Frame-shaped support portion>

The frame-shaped support portion 2 (hereinafter also simply referred to as "support portion") is attached in close contact with part of the hollow bag body 3 to be described later, and during use, and serves to press the hollow bag body 3 (transfer pressing force) and to fix the hollow bag body 3 so as not to hang down due to gravity when the hollow bag body 3 is in a suspended state (to prevent deformation of the hollow bag body 3 during conveyance). The support portion 2 can also serve as a coupling instrument for attaching the workpiece gripping device 1 to another instrument or device that performs operations, such as a robotic arm.

As illustrated in Figures 1 and 2, the frame-shaped support portion 2 has a literally frame shape and has an open inner side, and accordingly, has a non-contact region that does not contact the hollow bag body 3 to be described later. In other words, at least the non-contact region 14 where the frame-shaped support portion 2 and the hollow bag body 3 are not in contact with each other is formed between the both members. Specifically, as illustrated Figures 1 and 2, at least the non-contact region 14 that does not contact the frame-shaped support portion 2 is formed on an upper surface side (support portion side) 3a of the hollow bag body 3.

Since such a non-contact region 14 is formed between the frame-shaped support portion 2 and the hollow bag body 3, it is possible to prevent the hollow bag body 3 from being pulled upward, for example, even when the inside of the bag is depressurized (suctioned) as a means for causing a jamming transition, thereby contracting the bag in a state of being fitted to the workpiece. In other words, it is possible to make contracting force of the bag sufficiently act on the workpiece even when the inside of the bag is depressurized (suctioned). Moreover, since the non-contact region 14 is provided, restriction of movement and deformation of the bag is reduced even when the hollow bag body 3 is pressed against the workpiece, and thus it is possible to ensure a sufficient deformation amount (amount of sinking into or wrapping around the workpiece) of the bag in conformity with the shape of the workpiece, thereby improving close contact (fitting property) with the workpiece.

The size (area) of the non-contact region 14 is not limited as long as the above-described functions and effects can be exhibited, whereas it is preferably set so that during use, deformation of the hollow bag body 3 and sinking into or wrapping around the workpiece are sufficient. Specifically, the area of the inner open portion of the frame-shaped support portion 2 is preferably 30 to 85% relative to the total area thereof when it is assumed that no inner open portion is provided, and more preferably 50 to 85%. Alternatively, from another viewpoint, the frame-shaped support portion 2 is preferably designed such that 30 to 85% of the upper surface side (support portion side) 3a of the hollow bag body 3 relative to the total area of the frame-shaped support portion 2 is the non-contact region 14. A more preferable area ratio of the non-contact region 14 of the hollow bag body 3 (3a) is 50 to 85%. If the non-contact region 14 is too large beyond the range, the contact portion is small, which potentially impairs close contact between the frame-shaped support portion 2 and the hollow bag body 3. In addition, there is a concern that the bag portion may excessively move, for example, when moved upward or at high speed. Thus, it potentially causes the hollow bag body 3 to come off or fall from the frame-shaped support portion 2 during use, or causes the workpiece to come off the hollow bag body 3 due to movement of the bag portion. On the other hand, if the non-contact region 14 is too small, stability is improved because the close contact portion between the frame-shaped support portion 2 and the hollow bag body 3 increases, whereas as described above, deformation and movement of the hollow bag body 3 are potentially excessively restricted during use, and close contact (fitting property) with the workpiece is impaired, which potentially impairs the workpiece gripping function.

The shape of the frame-shaped support portion 2 only needs to be a literally frame shape as long as at least the above-described non-contact region 14 is formed inside. In addition, its outer peripheral shape is not limited to a rectangular shape, and the frame may have, for example, a circular, elliptical, or polygonal shape. Furthermore, as long as the frame portion can have sufficient close contact with the hollow bag body 3, the shape does not necessarily need to be uniform in the thickness direction, whereas it may vary in the thickness direction. The shapes may be set as appropriate in accordance with the shape of the workpiece to be gripped and the shape of an attachment portion to another instrument or device such as a robotic arm, as long as the functions of the frame-shaped support portion 2 can be exhibited.

The material of the frame-shaped support portion 2 may, but not limited to, be set as appropriate in accordance with usage. The material preferably has rigidity to an extent that at least it can support and stabilize the hollow bag body 3 during use. For example, the material may be appropriately selected from metals, resin molded bodies, and composite members thereof. The material is preferably made of a resin material from the viewpoint of weight. The frame-shaped support portion 2 may be composed of a laminated body of a single material or a laminated body of a plurality of materials, and may be composed of a connection of a single material or a connection of a plurality of materials. In addition, the thickness is not limited either, and it is preferable to use one having a thickness of usually 3 mm to 10 mm from the viewpoint of stability or the like.

<Adhesion layer>

As understood from Figure 2, the frame-shaped support portion 2 and the hollow bag body 3 are preferably in close contact with each other with an adhesion layer 5 interposed therebetween for the purpose of improving close contact and stability. In other words, the adhesion layer 5 is preferably disposed between the frame-shaped support portion 2 and the hollow bag body 3. The adhesion layer 5 is not limited as long as close contact and stability between the frame-shaped support portion 2 and the hollow bag body 3 can be improved, and may be one that can fix both members. For example, the adhesion layer 5 may be a close-contact layer (for example, elastic material) made of a well-known resin material, or a bonding agent layer made of a well-known bonding agent. More simply, the adhesion layer 5 may be an adhesive sheet or tape such as a double-sided adhesive tape. Although not limited thereto, the thickness of the adhesion layer 5 is preferably 0.01 mm to 2 mm usually, and more preferably 0.1 mm to 1 mm.

<Hollow bag body>

The hollow bag body 3 accommodates therein the material 4 the state of which changes due to a jamming transition, and is a bag-shaped body that can form such an accommodating space. The hollow bag body 3 may be formed into a bag shape from a single material or may be formed into a bag shape by combining a plurality of materials. As a method of combining a plurality of materials, there is, for example, a method of using an upper sheet and a lower sheet as described later. Moreover, part of the bag does not need to be made only of a single layer of one same material, and may be composed of a laminated body of a single material or a plurality of materials in accordance with usage and purpose, may be formed by connecting a single material or a plurality of materials, or may be composed of an appropriate combination of them.

As described above, the hollow bag body 3 has the non-contact region 14, and part of the upper surface side (support portion side) 3a is attached in close contact with one surface of the frame-shaped support portion 2. The "one surface" refers to a pressing surface when the frame-shaped support portion 2 is pressed against the hollow bag body 3, and specifically refers to a surface (bottom surface) in contact with the adhesion layer 5 in the frame-shaped support portion 2 illustrated in Figure 2. The shape of the contact surface and the like may be changed in accordance with the shape of the frame-shaped support portion 2. The hollow bag body 3 is preferably not attached to the other surface of the frame-shaped support portion 2. This is because, depending on how the workpiece gripping device is used, it is usually a practically preferable embodiment that, for example, an attachment or the like for mounting to a robot, or a frame or the like for transferring pressing force is attached to the other surface of the frame-shaped support portion 2, that is, an upper surface (surface opposite to the above-described pressing surface (bottom surface)) of the frame-shaped support portion 2. This is also because it is usually preferable that nothing is attached to a side surface (surface except for the bottom surface and the upper surface) of the frame-shaped support portion 2.

The hollow bag body 3 also includes 3b on the contact surface side with the workpiece. These 3a and 3b are not clearly distinguished, and it is sufficient that the support portion side 3a of the hollow bag body 3 for the frame-shaped support portion 2 and a workpiece contact surface side 3b are roughly divided in terms of roles. In this regard, in Figure 2, the hollow bag body 3 is entirely illustrated as one same material, whereas it may be made of two or more kinds of materials, and 3a and 3b may be made of different materials from each other.

As illustrated in Figure 2, it is a preferable embodiment that the shape of the hollow bag body 3 is a substantially hemispherical bag shape in view of formation of the inner accommodating space, contact with the workpiece, and the like, whereas it is not limited thereto. As long as the inner accommodating space can be formed, the hollow bag body 3 does not need to have a configuration in which only the lower side (workpiece contact surface side) is bulged, whereas it may have, for example, a configuration in which the upper side (bottom surface side of the frame-shaped support portion 2) is also bulged to some extent like a pad or a cushion. However, as described above, it is a preferable embodiment that the hollow bag body 3 is not provided on the other surface of the frame-shaped support portion 2 except for the pressing surface (bottom surface). Moreover, the shape may be bulged in the horizontal direction. In an embodiment, the shape may become the above-described shape during use even when the shape before use is not the above-described shape. The shape of the hollow bag body 3 may be determined as appropriate in view of close contact with the frame-shaped support portion 2 or close contact or fitting property with the workpiece. An extent (internal volume) to which the inner accommodating space is formed may also be determined as appropriate based on the same viewpoint. From the viewpoint of contact property and contact area with the workpiece, the area of the lower side (workpiece contact surface side) 3b of the hollow bag body 3 is preferably larger than that of the workpiece.

The hollow bag body 3 needs to be made of a material having flexibility that allows its shape to be changed in conformity with the surface shape and three-dimensional shape of the workpiece, and having hermeticity that does not allow gas ventilation so as to enable shape change by a pressure adjustment means (pressurization and depressurization) in the shape maintaining means to be described later. The hollow bag body 3 is preferably particularly flexible so as to be capable of gripping the workpiece by utilizing a jamming transition, and is preferably made of a relatively flexible and stretchable material having good followability to the shape of the workpiece. Moreover, the hollow bag body 3 is preferably configured to have a thickness with which such flexibility and stretchability are not impaired.

In order to have such properties, the hollow bag body 3 is preferably made of a material having a tensile elastic modulus of 10 to 50 MPa and a tensile elongation of 100 to 1000%. In addition, the hollow bag body 3 preferably has a thickness of 10 to 150 $\mu$m.

A more preferable upper limit of the tensile elastic modulus is 48 MPa, and a further preferable upper limit thereof is 46 MPa.

A more preferable lower limit of the tensile elongation is 200%, a further preferable lower limit thereof is 300%, and an even more preferable lower limit thereof is 500%. On the other hand, a more preferable upper limit of the tensile elongation is 900%.

A more preferable upper limit of the thickness is 140 μm, and a further preferable upper limit thereof is 130 μm. If the thickness is too small, the durability tends to decrease, which leads to damage by, for example, external force during use or electrical discharging in an embodiment of an electrostatic chuck sheet to be described later. In addition, if the thickness is too large, the deformation amount tends to decrease, and the followability to the workpiece tends to become poor.

Although not limited thereto, the material of the hollow bag body 3 is preferably relatively flexible and stretchable as described above and includes the above-described preferable tensile elastic modulus, tensile elongation, and thickness, and the material is preferably appropriately selected from those that satisfy such preferable properties. The preferable material is, for example, resin.

The preferable resin is, for example, polyurethane, polyurethane elastomer, soft polyvinyl chloride, polyvinylidene chloride, polyolefin, and polyolefin copolymer. These resins may be selected from one or two or more kinds of composites. Among them, it is more preferable to use polyurethane, polyurethane elastomer, and/or polyolefin copolymer from the viewpoint of having the above-described tensile elastic modulus and tensile elongation, or predetermined dielectric constant and volume resistivity related to electrostatic attraction characteristics.

Polyurethane elastomer is typically obtained by reacting a long-chain polyol, a chain extender, and a diisocyanate and is made of a soft segment having structural units derived from the long-chain polyol, and a hard segment having a polyurethane structure obtained from the reaction between the chain extender and the diisocyanate. When classified according to the kind of the long-chain polyol used as the soft segment component, examples thereof include polyester-based polyurethane elastomers, poly ether-based polyurethane elastomers, and polycarbonate-based polyurethane elastomers. In the present embodiment, it is more preferable to use a polyester-based polyurethane elastomer from the viewpoint that the above-described properties can be easily achieved. Examples of commercially available polyurethane elastomers include Higress series (Seedam Co., Ltd.) such as Higress DUS202-CDR 6HF and Higress DUS605-CDR 6HI, Silklon series (Okura Industrial Co., Ltd.), and Unigrand XN series (Nippon Unipolymer Co., Ltd.).

Polyolefin may be, for example, a polyethylene film made of ethylene, or a polyolefin resin made of an olefin monomer such as propylene, butene, pentene, hexene, heptene, or octene, or may contain such a polyolefin resin as a main component (for example, 80% by mass or more). In addition, a polyolefin copolymer obtained by copolymerizing two or more kinds of these olefin monomers may be used. Examples of such a copolymer include ethylene and an olefin monomer other than ethylene among the above-described olefin monomers. Examples of commercially available polyolefin copolymers include Polygrace (Takeda Sangyo Co., Ltd.) and Artply (Dia Plus Film Co., Ltd.).

As described later, the resin is preferably one that can be used in a form in which the hollow bag body 3 is formed by bonding a plurality of resin sheets, and is preferably a resin that can be fused by heat and pressure or can be adhered or bonded. The resin is more preferably a resin that can be fused (thermally laminated) since an adhesive layer or a bonding layer is unnecessary. Examples of such a resin include polyurethane elastomer and soft polyvinyl chloride among the above-described resins.

On the workpiece contact surface side 3b of the hollow bag body 3, the surface roughness is preferably relatively small in order to more effectively grip the workpiece on the surface. Such roughness can be provided by employing a material having such roughness, by applying a surface (referred to as a mirror surface in some cases) adjusted to have such roughness as a commercially available product, or by appropriately processing and adjusting the surface by a well-known method such as mirror finishing.

<Material the state of which changes due to a jamming transition, and shape maintaining means>

The material 4 (hereinafter also simply referred to as "jamming material 4" or the like) the state of which changes due to a jamming transition is accommodated in the hollow bag body 3. A jamming transition refers to a state change in which powder composed of a large number of particles having the size of sand or powder behaves like fluid when the density of particles contained therein is lower than a threshold value, whereas the powder behaves like solid when the density is higher than the threshold value. The workpiece gripping device of the present invention can grasp or hold the workpiece by deforming or maintaining the shape of the hollow bag body 3 by utilizing the jamming transition of the jamming material 4. Then, in combination with attraction by the electrostatic attraction means to be described later, the workpiece is gripped by the hollow bag body 3.

Such a jamming material 4 may be selected as appropriate in accordance with the shape maintaining means configured to deform and maintain the shape of the hollow bag body 3.

For example, in a case where the shape maintaining means is a pressure adjusting means configured to adjust (depressurize and pressurize) pressure inside the hollow bag body 3, powder or granular material made of one or more materials selected from the group consisting of typical inorganic materials, organic materials, and metallic materials may be used. Such powder or granular material may be, for example but not limited to, beads made of natural mica, talc, aluminum, copper, or glass, beads made of resin such as rubber or polystyrene, or food powder such as coffee powder or wheat powder. The size (particle diameter) of powder and granular material is not limited, and usually, those having a median particle size of 10 μm to 500 μm may be widely used. From the viewpoint of usability, the median particle size is preferably 50 μm to 200 μm.

In a case where such a powder or granular material used as the jamming material 4, the shape maintaining means is a pressure adjusting means, and the inside of the bag is depressurized by the means while the hollow bag body 3 is in a state conforming to the shape of the workpiece, and accordingly, the hollow bag body 3 maintains its shape while grasping or holding the workpiece. The workpiece can be gripped and lifted up in this state. Note that a typical pressurization depressurization device (for example, vacuum pump or vacuum ejector) may be used as the pressure adjusting means. In this case, as illustrated in Figures 1 and 2, for example, a connection component 7 together with ventilation means such as a ventilation hole 6 and a tube 8 communicating with the ventilation hole 6 is provided on the upper surface side 3a of the hollow bag body 3. The ventilation hole 6 is preferably provided in advance in the process of preparing the hollow bag body 3. In addition, a non-illustrated pressurization depressurization device is provided at the end of the tube 8. Accordingly, pressure adjustment inside the hollow bag body 3 is performed by letting gas such as air in and out through the ventilation hole 6.

On the other hand, the jamming material 4 may be a fluid, and may be, for example, water or oil. In this case, for example, a liquid pump capable of suctioning these fluids is used as the shape maintaining means.

In addition, for example, a magnetic fluid (MR fluid) in which magnetic particles (granular material) are dispersed in a liquid (fluid), or an electrorheological fluid (ER fluid) in which insulating fine particles (granular material) are dispersed in an insulating liquid (fluid) may be used as a special jamming material 4. In the case of these particles (granular material), the shape maintaining means is, in the case of the magnetic fluid, to apply a magnetic field to the magnetic fluid by a permanent magnet or an electromagnet so as to increase the viscosity of the magnetic fluid, and in the case of the electrorheological fluid, to apply an electric field to the electrorheological fluid by an electric field application portion so as to increase the viscosity of the electrorheological fluid.

The present invention is not limited to the jamming material 4 and the shape maintaining means described above, and any method capable of deforming and maintaining the shape of the hollow bag body 3 in conformity with the shape of the workpiece by utilizing the characteristics of the jamming material 4 may be selected and employed as appropriate. Among them, from the viewpoints of usability, simplicity, and the like, the shape maintaining means is preferably the above-described pressure adjusting means performed by letting gas such as air in and out through the ventilation hole 6. In a case where the shape maintaining means is the pressure adjusting means, the jamming material 4 is preferably the above-described powder or granular material made of one or more materials selected from the group consisting of typical inorganic materials, organic materials, and metallic materials.

Figure 3 schematically illustrates an example of a series of operations when a workpiece 13 is gripped by the workpiece gripping device 1 in a case where the pressure adjusting means is used as the shape maintaining means. In Figure 3, the workpiece gripping device 1 is schematically illustrated, whereas it is assumed that the above-described non-illustrated components are provided, and in addition, the electrostatic attraction means to be described later is provided on the workpiece contact surface side 3b of the hollow bag body 3.

(I) of Figure 3 illustrates a state right before the workpiece contact surface side 3b of the hollow bag body 3 is pressed against the workpiece 13. In this state, depressurization is not performed to an extent that deformation or maintenance of the shape of the hollow bag body 3 occurs, and the shape of the hollow bag body 3 is deformable when pressed against the workpiece. Note that, in this state, the hollow bag body 3 may be pressurized or depressurized to some extent as long as the purpose is not impaired.

(II) of Figure 3 illustrates a state in which the workpiece gripping device 1 is moved down from the state of (I) and the hollow bag body 3 (3b) is pressed against the workpiece 13. In the drawing, arrows α indicate pressing force in this case. Accordingly, the hollow bag body 3 deforms (elastically deforms) in conformity with the shape of the workpiece 13. Then, in this state, the shape of the hollow bag body 3 is maintained by utilizing the jamming transition and the shape maintaining means. Since the shape maintaining means is the pressure adjusting means in Figure 3, suction force as indicated by arrow β in the drawing is applied by actuating a non-illustrated vacuum pump or the like, and accordingly, gas inside the hollow bag body 3 is suctioned through the tube 8, resulting in depressurization and contraction of the bag. In this case, contraction force as indicated by arrows γ in the drawing is applied to the workpiece 13. Accordingly, the hollow bag body 3 maintains (fixes) its shape while remaining in close contact (fit) with the shape of the workpiece 13. In other words, the workpiece 13 is grasped (held) by the hollow bag body 3.

In the workpiece gripping device of the present invention, since the frame-shaped support portion 2 and part of the upper surface side 3a (support portion side) of the hollow bag body 3 are not in contact with each other as described above (in other words, since the non-contact region 14 exists), the amount of the bag pulled toward the frame-shaped support portion 2 side can be largely reduced even when the hollow bag body 3 is depressurized. Thus, in the workpiece gripping device of the present invention, the hollow bag body 3 (3b) can sufficiently exert the above-described contraction force γ while remaining in close contact (fit) with the workpiece 13, which is preferable.

Moreover, in the state of (II), since electrostatic attraction force is applied between the hollow bag body 3 (3b) and the workpiece 13 by the electrostatic attraction means provided on the workpiece contact surface side 3b of the hollow bag body 3, close contact (fitting property) between the hollow bag body 3 (3b) and the workpiece 13 is further improved. Generation of the electrostatic attraction force is performed through, for example, non-illustrated voltage application to the electrostatic attraction means.

(III) of Figure 3 illustrates a state in which the workpiece 13 grasped (held) by the hollow bag body 3 in the state of (II) is lifted up. Specifically, by actuating a non-illustrated means (instrument or device) in the state of (II) and moving up the workpiece gripping device 1, the workpiece 13 is lifted up in a state of being grasped (held) by the hollow bag body 3.

Thereafter, the workpiece 13 is released from the workpiece gripping device 1 by stopping or releasing the shape maintaining means and the electrostatic attraction means.

<Electrostatic attraction means>

As described above, the electrostatic attraction means is provided on the workpiece contact surface side 3b of the hollow bag body 3. Since the electrostatic attraction means is provided, the above-described gripping of the workpiece by utilizing the jamming transition is reinforced by attraction due to electrostatic force, and accordingly, the gripping of the workpiece can be more reliably performed.

The electrostatic attraction means is not limited, and a well-known means may be used as it is, or a well-known means may be improved or modified and used. For example, a typical electrostatic chuck device in which an electrode is disposed inside a dielectric and voltage is applied to the electrode so as to charge the surface of the dielectric with static electricity is suitably applicable as the electrostatic attraction means. The electrostatic attraction means is provided on a part or the entire surface of the workpiece contact surface side 3b of the hollow bag body 3, and its installation range may be determined as appropriate in accordance with the size and kind of the workpiece.

As specific examples of the electrostatic attraction means, for example, an electrostatic chuck device (for example, electrostatic chuck sheet) may be externally attached to a part or the entire surface of the workpiece contact surface side 3b of the hollow bag body 3 not including the electrostatic attraction means, or the workpiece contact surface side 3b of the hollow bag body 3 itself may be composed of an electrostatic attraction means such as an electrostatic chuck device. It is preferable that the workpiece contact surface side 3b of the hollow bag body 3 itself be composed of an electrostatic attraction means such as an electrostatic chuck device.

For example, the hollow bag body 3 is preferably constituted as follows. Specifically, in a method, the support portion side 3a of the hollow bag body 3 is formed as an upper sheet, and one surface (in other words, the workpiece contact surface side 3b) of the upper sheet opposite to the support portion side 3a is formed from a lower sheet different from the upper sheet. In this case, the lower sheet has the workpiece contact surface 3b as well as the electrostatic attraction means. Accordingly, it is a preferable embodiment that the lower sheet itself is a part (lower side 3b) of the hollow bag body 3 and is the electrostatic attraction means. In this manner, since the lower sheet having the electrostatic attraction means is formed separately from the upper sheet, for example, it is possible to prevent occurrence of arcing due to dielectric breakdown by contact between the upper sheet and the lower sheet. Furthermore, for example, in a case where the electrode is composed of a conductive paint as described later, strength tends to be relatively weak, and thus the electrode can be provided only in necessary portions.

In this case, the upper sheet and the lower sheet are preferably attached to each other by, for example, joining, bonding, or fusion between materials used in the sheets. Among them, in consideration of the above-described characteristics (such as flexibility, softness, stretchability, and hermeticity) of the hollow bag body 3, it is preferable that the upper sheet and the lower sheet be formed as resin sheets and these resin sheets be fused by heat and pressure or adhered or bonded, and more preferably, fusion (thermal lamination) between the resin sheets is used as described above.

<Electrostatic chuck sheet>

As a preferable embodiment in a case where the lower sheet itself is the electrostatic attraction means, the lower sheet is an electrostatic chuck sheet including an electrode inside. Specifically, the electrostatic chuck sheet preferably has a configuration in which an electrode is disposed inside a resin sheet. Figure 4 illustrates an example of the workpiece gripping device in a case where the lower sheet is composed of such an electrostatic chuck sheet. In Figure 4, the hollow bag body 3 is composed of an upper sheet 3c and a lower sheet 3d. It is preferable that the lower sheet 3d be constituted such that an electrode 9 (preferably, relatively thin electrode sheet) is disposed between a first resin film $3d_1$ on the inner side (the jamming material 4 side) of the bag of the hollow bag body 3 and a second resin film $3d_2$ on the outer side (workpiece contact surface side) 3b of the bag of the hollow bag body 3, and be formed by fusion or bonding between these resin films. Specifically, the first resin film $3d_1$, the electrode 9, and the second resin film $3d_2$ are preferably composed of a laminated sheet in which the resin films are fused or bonded. The first resin film $3d_1$, the electrode 9, and the second resin film $3d_2$ are more preferably a laminated sheet in which the resin films are fused (thermally laminated).

In Figure 4, a power supply member 12 such as a conductive tape provided on the electrode 9, and a power supply cable 11 for supplying power thereto are provided so as to apply voltage to the electrode 9 of the electrostatic chuck sheet during use, and the power supply cable 11 is connected to a non-illustrated power source device.

As for the resin films used for the electrostatic chuck sheet, films having properties (such as tensile elastic modulus, tensile elongation, and thickness) as described above are preferably used in order to satisfy characteristics required for the hollow bag body 3. Thus, as for the resin, as well, the resin exemplified above is preferably used. Note that the first resin film $3d_1$ and the second resin film $3d_2$ may be formed of different resins or the same resin. Moreover, as long as the purpose of the present invention is not impaired, the first resin film $3d_1$ and the second resin film $3d_2$ may each be formed of a plurality of layers of the same kind or different kinds as in the above description, or layers such as resin films or sheets other than the first resin film $3d_1$ and the second resin film $3d_2$ may be additionally provided.

At least the second resin film $3d_2$ on the contact surface side of the workpiece preferably has a volume resistivity of $10^9 \, \Omega \cdot cm$ to $10^{14} \, \Omega \cdot cm$ and preferably has a dielectric constant of 2 F/m or more. More preferably, the volume resistivity is $10^{10} \, \Omega \cdot cm$ to $10^{12} \, \Omega \cdot cm$. By using a resin having such properties at least as a resin film on the contact surface side with the workpiece, electrostatic attraction force can be sufficiently exhibited, which is preferable. The use of a material having such properties as 3b corresponding to the contact surface side of the hollow bag body 3 with the workpiece is not limited only to the embodiment of the electrostatic chuck sheet, whereas it is preferably employed in the above description as well.

Note that, the volume resistivity and dielectric constant of the first resin film $3d_1$, which is not on the contact surface side with the workpiece, may be different from those of the second resin film $3d_2$, whereas since it is conceivable that current intended to flow between the workpiece and the contact surface through the second resin film $3d_2$ on the workpiece contact surface side flows toward the first resin film $3d_1$ side opposite to the contact surface, the volume resistivity of the first resin film $3d_1$ is preferably the same as or larger than the second resin film $3d_2$.

<Electrode>

Either a unipolar type or a bipolar type can be used as the electrode used in the electrostatic attraction means of the workpiece gripping device of the present invention, whereas the electrode is preferably a bipolar type. This is because, if a unipolar type is employed, it may be needed to devise a plan such that the electrode is disposed on the workpiece. Thus, a bipolar electrode including a positive electrode and a negative electrode is preferably used. The material, shape, pattern, and the like of the electrode are not limited, and a well-known electrode or an electrode obtained by improving or modifying a well-known electrode may be used. For example, a metal foil may be used as it is, a metal deposited by a sputtering method, an ion plating method, or the like may be etched into a predetermined shape, a metallic material may be thermally sprayed, or a conductive paint may be applied or printed into a predetermined shape. The electrode having a thickness of 1 to 100 µm, for example, may be used.

In consideration of the properties (such as flexibility, softness, stretchability, and hermeticity) of the hollow bag body 3 as described above, the electrode preferably has flexibility and softness. The flexibility and softness may be obtained by a method of optimizing the above-described material, shape, thickness, and the like. In order to exhibit flexibility and softness among them, part or all of the electrode is preferably made of a conductive paint. More preferably, the electrode is made only of a cured conductive paint (conductive coating film). In this case, it is a preferable embodiment that the electrode is an electrode sheet having a thickness of 30 to 100 µm to obtain sufficient conductivity. Since flexibility and softness tend to be impaired if the thickness is too large, a more preferable upper limit of the thickness is 80 µm, and a further preferable upper limit thereof is 70 µm. It is more preferable that flexibility and softness be adjusted so that cracking or conductivity loss does not occur even when stretch or contraction occurs during use. For example, as confirmed in examples to be described later, the conductive coating film is preferably formed so as to satisfy that a "sheet with electrode" obtained by applying a conductive paint to the first resin film or the second resin film and drying and curing the paint has a tensile elastic modulus of 10 to 50 MPa and/or a tensile elastic modulus of 100 to 1000%.

A well-known conductive paint may be used as the conductive paint. Although not limited thereto, the conductive paint may be, for example, a conductive paint in which particles of a material exhibiting conductivity are held in a binder resin, or a conductive paint containing metal particles exhibiting conductivity. Examples of such a conductive paint include a polyester-based AgCu conductive paint in which AgCu is held in a polyester resin, a carbon-based conductive paint in which carbon black or the like is held in various resins, and a zinc-based paint, a nickel-based paint. These conductive paints can be used in any form such as an organic solvent type, a water-based type, or a powder type.

As a method of applying the conductive paint, for example, a base material may be immersed in the conductive paint so as to have a conductive coating film on its surface, or there is an application method using a brush or spraying. The amount of the conductive paint to be applied is preferably adjusted as appropriate to obtain the thickness of the conductive coating film after drying. In a case where the conductive paint is applied to the first resin film or the second resin film so as to form the electrode, it is preferable to make the conductive paint easily adhere, and it is preferable to adjust the roughness of an application surface of the resin film. In this case, it is preferable that the roughness of the resin film be relatively large. In order to provide such roughness, a material inherently having such roughness may be employed, a surface (may be referred to as matte surface) adjusted to such roughness as a commercially available product may be applied, or the surface may be processed and adjusted as appropriate by a well-known method such as rough surface processing through, for example, plasma treatment by a plasma generation device.

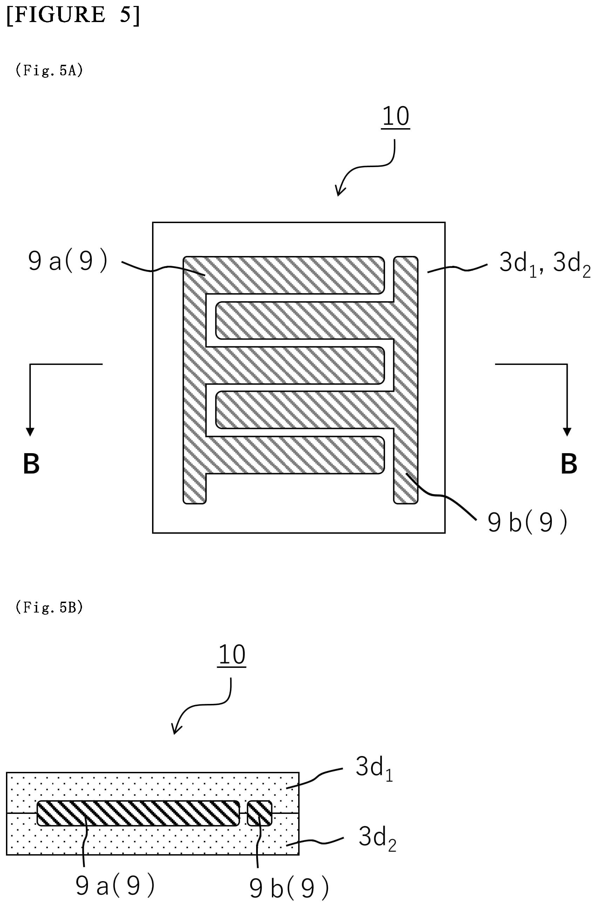

For example, a flat plate shape, a semicircular shape, or a pattern shape such as comb-tooth shape or a mesh may be appropriately selected as the shape of the bipolar electrode, whereas it is preferable to use a pair of comb-shaped electrodes, and it is more preferable to use an electrode formed by meshing comb teeth of a pair of comb-shaped electrodes with each other in the same plane while maintaining a constant spacing as illustrated in Fig. 5A and Fig. 5B of Figure 5. By employing such a pattern, strong electrostatic attraction force to the workpiece tends to be obtained. Although detailed principle is not clear, by employing such a pattern, it is possible to generate gradient force between the workpiece and an insulator even when the workpiece is not a conductor or a semiconductor, and to generate stronger electrostatic attraction force in the bipolar electrode.

Note that, in a case where the bipolar electrode is formed by meshing comb teeth of a pair of comb-shaped electrodes with each other in the same plane while maintaining a constant spacing, it is preferable that the width (electrode width) of each comb tooth be 0.5 to 20 mm and the spacing (pitch) between the comb teeth is 0.5 to 10 mm, and it is more preferable that the width (electrode width) of each comb tooth is 1 to 10 mm and the spacing (pitch) between the comb teeth is 1 to 3 mm. It is preferable that the width (electrode width) of each comb tooth be set to 1 mm or more so that the workability of the electrode is improved, and the width be set to 10 mm or less so that decrease in attraction force can be prevented. It is also preferable that the spacing (pitch) between the comb teeth be set to 1 mm or more so as to contribute to prevention of electrical discharging between electrodes, and the spacing be set to 3 mm or less so that decrease in attraction force can be prevented. Thus, it is preferable that the electrode be formed with such a width (electrode width) of each comb tooth and a spacing (pitch) between the comb teeth because attraction force, electrode workability, safety during use, and the like can be ensured.

Then, at least the first resin film $3d_1$, the electrode 9, and the second resin film $3d_2$ as described above are used and laminated into a laminated sheet. A method of manufacturing the laminated sheet is not limited, and a method to be described later in examples is preferably employed. The electrode 9 needs to be sandwiched between the resin films so as not to be exposed, and as a specific method, the electrode is preferably fused by heat and pressure after sandwiched between the resin films, as described above. A bonding sheet, a bonding agent, or an adhesive may be used for bonding as necessary, whereas there is a possibility that deformation, stretch, and contraction are encumbered or a bonding surface is peeled when the electrostatic chuck sheet (hollow bag body 3) is pressed against the workpiece during use or is deformed, stretched, or contracted to maintain the shape, and thus it is more preferable to employ a method of fusion by utilizing thermoplasticity of the resin films.

The electrostatic chuck sheet obtained in this manner preferably has a thickness of 90 to 350 $\mu$m, a tensile elastic modulus of 10 to 50 MPa, and a tensile elongation of 100 to 1000%.

A more preferable upper limit of the tensile elastic modulus of the electrostatic chuck sheet is 48 MPa, and a further preferable upper limit thereof is 46 MPa.

A more preferable lower limit of the tensile elongation of the electrostatic chuck sheet is 200%, and a further preferable lower limit thereof is 300%. On the other hand, a more preferable upper limit of the tensile elongation is 900%.

A more preferable lower limit of the thickness of the electrostatic chuck sheet is 100 $\mu$m, and a further preferable lower limit thereof is 130 $\mu$m. On the other hand, a more preferable upper limit of the thickness is 230 $\mu$m, and a further preferable upper limit thereof is 180 $\mu$m. If the thickness is too small, the durability tends to decrease, which leads to damage by, for example, external force during use or electrical discharging. In addition, if the thickness is too large, the deformation amount tends to decrease, and the followability to the workpiece tends to become poor.

Then, in a case where the obtained electrostatic chuck sheet is used as the lower sheet 3d of the hollow bag body 3, similarly to the above-described case where the laminated sheet is prepared, it is preferable to use a method in which the upper sheet 3c and the lower sheet 3d are laminated through fusion by heat and pressure. In this case, since a space for accommodating the jamming material 4 inside needs to be ensured, it is preferable to limit a fused portion to a range in consideration of the accommodating space, and for example, it is sufficient that a certain range of outer peripheral end portions of the upper sheet 3c and the lower sheet 3d is fused. As long as hermeticity is ensured, not the entire surface of the outer peripheral end portions necessarily needs to be fused. For example, as understood from an enlarged portion of Figure 4, it is preferable that the lower surface of the upper sheet 3c and the upper surface of the first resin film $3d_1$ in the lower sheet be fused in the outer peripheral end portions of the upper sheet 3c and the lower sheet 3d. Note that, although the electrode 9 is illustrated in the enlarged portion, it is not essential that the electrode 9 is disposed up to an end portion of the resin sheet. The electrode 9 may have a size corresponding to a range of the lower sheet 3d that contacts the workpiece.

<Method of manufacturing workpiece gripping device>

A method to be described later in examples is preferably employed as a method of manufacturing the workpiece gripping device. Specifically, the hollow bag body 3 is prepared by a preferable method as appropriate irrespective of whether the hollow bag body 3 is made of one same material or composed of the upper sheet 3c and the lower sheet 3d. Note that, in a case where the shape maintaining means is the pressure adjusting means, the ventilation hole 6 is preferably provided in the upper sheet 3c in advance. As for a method of forming the ventilation hole 6, a typical drilling tool or instrument may be used.

The jamming material 4 to be accommodated in the hollow bag body 3 may be accommodated in the process of preparing the hollow bag body 3 irrespective of whether the hollow bag body 3 is composed of the upper sheet 3c and the lower sheet 3d, or may be introduced and accommodated through the above-described ventilation hole 6 or the like after the preparation of the hollow bag body 3 is ended. Although not limited thereto, the degree of how much the jamming material 4 is accommodated is preferably approximately 60 to 90% of the internal volume of the bag, and more preferably 70 to 80% thereof. If the amount of the jamming material 4 is too large, deformation of the bag portion when the workpiece is gripped may be reduced and sufficient grasping (holding) of the workpiece may not be achieved. On the other hand, if the amount of the jamming material 4 is too small, the amount of the jamming material that grasps (holds) the workpiece is insufficient, and gripping of the workpiece is potentially impaired in this case as well.

After the hollow bag body 3 in which the jamming material 4 is accommodated is prepared, other necessary components (for example, the connection component 7 of the ventilation hole 6, the tube 8, and other necessary components related thereto) are prepared or installed, and the above-described frame-shaped support portion 2 is attached to the support portion side (3a or 3c) of the hollow bag body 3. As described above, the adhesion layer 5 is disposed between the frame-shaped support portion 2 and the hollow bag body 3 as needed. In this manner, the workpiece gripping device of the present invention can be manufactured.

<Power source device>

In the workpiece gripping device of the present invention, a power source device is prepared in a case where voltage application from the outside is needed as the electrostatic attraction means. The power source device may be the same as that used in a typical electrostatic attraction device or the like as long as the device can generate direct-current high voltage. A potential difference to be generated may be $\pm 100$ to $\pm 5000$ V approximately, and a step-up circuit (high voltage generation circuit) capable of increasing voltage to necessary voltage may be provided as necessary. As for a method of applying voltage to the electrostatic attraction means, for example, the power supply member 12 such as a conductive tape provided on the electrode 9 of the electrostatic attraction means, and the power supply cable 11 for supplying power thereto are used as illustrated in Figure 4.

In the workpiece gripping device of the present invention, if necessary, instruments or devices such as sensors, controllers, and image processing systems may be additionally provided in accordance with the purposes of gripping, transferring, and conveying the workpiece, for example. Moreover, the shapes, sizes, materials, and the like of components may be changed or added within the scope of the purpose of the present invention.

The workpiece gripping device of the present invention may be used by itself or may be used as an end effector of a robot.

The workpiece to be gripped in the present invention is not limited, and those having a three-dimensional shape are preferable, whereas an electric conductor (metallic three-dimensional object or mechanical component) having a three-dimensional shape is a more preferable target. The workpiece is not limited to an electric conductor, and may be a semiconductor or may be an insulator that needs gradient force. The shape is not limited to a three-dimensional shape, and a non-three-dimensional object, such as a plate, a sheet, cloth, a resin film, a metal foil, and a metal plate, which has a relatively thin shape such as a flat plate shape or a sheet shape, may be targeted.

Examples

Preferable embodiments of the present invention will be specifically described below based on examples and comparative examples, whereas the present invention is not interpreted as being limited to the embodiments below.

[Example 1]

<Production of workpiece gripping device>

The workpiece gripping device illustrated in Figure 4 was produced through a procedure described below.

(1) First, two identical polyester-based polyurethane elastomer films (product name: Higress DUS202-CDR 6HF manufactured by Sheedom Co., Ltd.; 170 mm $\times$ 150 mm; thickness: 50 $\mu$m) were prepared as the first resin film $3d_1$ and the second resin film $3d_2$, and one of them was used to laminate a masking film (masking SM cutting sticker sheet SM-01) onto its matte surface.

(2) Subsequently, only the masking film was cut by a cutting plotter to form an electrode mask. Unnecessary portions of the cut electrode mask were removed, and a conductive paint (product name: Polycalm PCS-S2117 manufactured by Plascoat Co., Ltd.) was applied and adjusted so as to obtain a thickness of 30 $\mu$m after drying.

(3) After the conductive paint was dried and cured, unnecessary masking parts were removed, and a bipolar electrode 9 (electrode sheet) having a pattern as illustrated in Fig. 5A and Fig. 5B of Figure 5 were formed on the matte surface of a polyurethane film (sheet with electrode). The bipolar electrode was formed by meshing comb teeth of a pair of comb-shaped electrodes with each other in the same plane while maintaining a constant spacing, the width (electrode width) of each comb tooth was 10 mm, and the spacing (pitch) between the comb teeth was 3 mm.

(4) A copper foil tape (product name: Electric Tape CU-35C manufactured by 3M Co., Ltd.) as the power supply member 12 was bonded to each of the positive electrode and the negative electrode of the formed electrode 9 (9a and 9b), and a silicone-coated cable (power supply cable 11; product name: flame-retardant silicone rubber insulated wire RSU-26 manufactured by Nissei Electric Co., Ltd.) was attached to the copper foil tape by soldering.

(5) The matte surface of another polyurethane film was placed on an electrode formation side of the sheet with electrode, and the films were pressed while applying a temperature of 120°C approximately by an iron or a laminator, and were fused over the entire surface. This was used as an electrostatic chuck sheet 10 (lower sheet 3d).

(6) Separately from the electrostatic chuck sheet 10 (the lower sheet 3d), another identical polyurethane film was prepared as the upper sheet 3c, and a hole (ventilation hole 6) was formed at one place thereof by using a hole punch. After the hole was formed, the matte surface of the polyurethane film was placed over a surface (mirror surface) of the electrostatic chuck sheet 10 obtained as described above, and 10 mm approximately of its outer peripheral end portion was thermally fused by applying a temperature of 120°C by an iron or a laminator. This was used as the hollow bag body 3. The internal volume of the hollow bag body 3 was 240000 mm$^3$ approximately.

(7) Powder (glass beads (median particle size: 106 to 90 $\mu$m) manufactured by Fuji Manufacturing Co., Ltd.) was introduced through the above-described hole (the ventilation hole 6) part formed in the hollow bag body 3. The volume of the powder was set to 70 to 80% approximately of the volume of the bag.

(8) Subsequently, a cloth filter (polyester smooth) was installed from the surface side into the hole formed on the upper sheet 3c side as described above. Then, a 3-cm square plate and a one-touch joint (corresponding to the connection component 7) were attached from the side where the filter was installed, and an air tube 8 (outer diameter: $\phi$6 mm, inner diameter: $\phi$4 mm) made of a soft polyurethane material was attached to the joint.

(9) Lastly, a double-sided adhesive tape (width: 15 mm approximately) as an adhesion layer was attached in a frame shape from the upper sheet 3c side of the hollow bag body 3, and a frame-shaped support portion (120 mm × 100 mm (with an inner space portion corresponding to the non-contact region 14 being 90 mm × 70 mm), thickness: 5 mm) made of a polylactic acid resin material was attached thereto, and accordingly, the workpiece gripping device 1 according to Example 1 of the present invention was acquired.

[Example 2]

Except that a polyester-based polyurethane elastomer film having a thickness of 100 $\mu$m was used, the workpiece gripping device 1 according to Example 2 was produced through the same procedure as in Example 1.

<Measurement of tensile elastic modulus and the tensile elongation>

The tensile elastic modulus and the tensile elongation were measured by the following procedure for the following samples A to C formed by using the resin and the electrode used in Example 1.

(Samples)

- Sample A: Polyester-based polyurethane elastomer film (product name: Higress DUS202-CDR 6HF manufactured by Sheedom Co., Ltd., thickness: 50 $\mu$m) used in Example 1
- Sample B: Electrostatic chuck sheet (total thickness 130 $\mu$m of two Samples A and a 30 $\mu$m-thick electrode made of a conductive paint) produced in the course of Example 1
- Sample C: Sheet with electrode (total 80 $\mu$m of Sample A and 30 $\mu$m-thick electrode made of a conductive paint) produced in the course of Example 1

<Measurement of longitudinal elastic modulus (tensile elastic modulus) of sheet>

- Instrument used:
  (Material testing machine) Precision universal testing machine Autograph, Shimadzu Corporation, AGX-50kNV
- Test piece size: length 150 mm × width 25 mm
- Number of tests: two for each sample
- Test method: with reference to JIS K 7127
- Measurement procedure: an upper end portion and a lower end portion of each test piece were fixed to the device, and the test piece was stretched at a speed of 1 mm/min to measure the tensile elastic modulus.

Results are listed in Table 1.

[Table 1]

| (Resin sheet) | Sample A-1 | Sample A-2 | Average | Standard deviation |
|---|---|---|---|---|
| Tensile elastic modulus (MPa) | 45.1 | 45.5 | 45.3 | 0.28 |

| (Electrostatic chuck sheet) | Sample B-1 | Sample B-2 | Average | Standard deviation |
|---|---|---|---|---|
| Tensile elastic modulus (MPa) | 21.0 | 25.0 | 23.0 | 2.83 |

| (Sheet with electrode) | Sample C-1 | Sample C-2 | Average | Standard deviation |
|---|---|---|---|---|
| Tensile elastic modulus (MPa) | 26.2 | 26.0 | 26.1 | 0.14 |

<Measurement of tensile elongation of sheet>

- Instrument used:

  (Material testing machine) Precision universal testing machine Autograph, Shimadzu Corporation, AGX-50kNV, Video-type non-contact extensometer, Shimadzu Corporation, TRViewX500D

- Test piece size: length 150 mm × width 25 mm
- Number of tests: two for each sample
- Test method: with reference to JIS K 7127
- Measurement procedure: the above-described material testing machine and video-type non-contact extensometer were used. An upper end portion and a lower end portion of each test piece were fixed to the device, and the test piece was stretched at a speed of 100 mm/min until it broke. The state in which the test piece was stretched until it broke was captured by the video-type non-contact extensometer, and the tensile elongation was measured.

Results are listed in Table 2.

[Table 2]

| (Resin sheet) | Sample A-1 | Sample A-2 | Average | Standard deviation |
|---|---|---|---|---|
| Tensile elongation (%) | 563 | 572 | 568 | 6.36 |

| (Electrostatic chuck sheet) | Sample B-1 | Sample B-2 | Average | Standard deviation |
|---|---|---|---|---|
| Tensile elongation (%) | 366 | 356 | 361 | 7.07 |

(continued)

| (Sheet with electrode) | Sample C-1 | Sample C-2 | Average | Standard deviation |
|---|---|---|---|---|
| Tensile elongation (%) | 366.6 | 374.3 | 370.4 | 5.47 |

[Comparative Example 1]

A workpiece gripping device according to Comparative Example 1 was produced by the same procedure as in Example 1 except that a frame-shaped support portion having no inner space portion corresponding to the non-contact region 14 was used. In Comparative Example 1, the frame-shaped support portion 2 and the upper sheet of the hollow bag body 3 are bonded over the entire surface through the adhesion layer 5.

<Evaluation of deformation amount (amount of sinking into workpiece) of hollow bag body>

Each of the workpiece gripping devices of Example 1 and Comparative Example 1 produced as described above was used to measure the deformation amount (amount of sinking into a workpiece) when the device was pressed against the workpiece. An aluminum cylindrical material with scale markings (diameter: 15 mm, height: 50 mm) was used as the workpiece.

The lower sheet 3d side (workpiece contact surface side) of each of the workpiece gripping devices of Example 1 and Comparative Example 1 was vertically pressed against the bottom surface of the workpiece until sinking no longer progressed, and the degree of deformation (amount of sinking) of the lower sheet 3d side was measured from the scale markings attached to the workpiece.

Evaluation results were as follows.

The amount of sinking of the workpiece gripping device of Example 1: 2 cm
The amount of sinking of the workpiece gripping device of Comparative Example 1: 1 cm

<Evaluation 1 of gripping force>

The workpiece gripping device of Example 1 produced as described above was used, and a power source device (electrostatic chuck power source CTPS-3KV2AF manufactured by Aid Giken Co., Ltd., maximum output: 3kV) was prepared at the end of the power supply cable 11.

First, the frame-shaped support portion 2 of the workpiece gripping device 1 was attached to a robotic arm (COBOTTA manufactured by DENSO WAVE Incorporated) and lifted, and after the power source device was turned on, and a silicon wafer with a string having a size of 2 cm square was attracted onto the center of the lower sheet 3d of the lifted workpiece gripping device.

Subsequently, in the state in which the silicon wafer was attracted onto the workpiece gripping device, a weight was attached to the string attached to the silicon wafer, and it was confirmed up to what weight in gram the silicon wafer could be gripped. The weight at which the wafer fell was used an evaluation of gripping performance (number of repetition: 10). Note that the holding time of the weight was set to 10 seconds or more.

Results are listed in Table 3 below.

[Table 3]

| Repetition | 1 | 2 | 3 | 4 | 5 | 6 | 7 | 8 | 9 | 10 | Average [g] | Standard Deviation |
|---|---|---|---|---|---|---|---|---|---|---|---|---|
| Grippable weight [g] | 100 | 80 | 80 | 120 | 100 | 80 | 80 | 80 | 80 | 100 | 90 | 13.4 |

<Evaluation 2 of gripping force>

In <Evaluation 1 of gripping force> described above, a metal fork, a knife, or a pen having a weight of 50g approximately was used in place of the silicon wafer.

Specifically, first, the air tube 8 of the workpiece gripping device 1 according to Example 1 was connected to a vacuum pump (manufactured by Nitto Kohki Co., Ltd.). Subsequently, in a state in which the lower sheet 3d side of the workpiece gripping device 1 was sufficiently pressed against each of the fork, the knife, and the pen, the vacuum pump was turned on to suction the inside of the hollow bag body 3, thereby causing a jamming transition. Accordingly, the hollow bag body 3 contracted along the shape of each of the fork, the knife, and the pen and held along the shape. In addition, the power source device was turned on as in <Evaluation 1 of gripping force>. In this state, when the robotic arm was moved so that the workpiece gripping device 1 was lifted upward, the fork, the knife, and the pen were all lifted while being gripped by the hollow bag body 3 of the workpiece gripping device 1.

Thereafter, when the power source device was turned off, the gripped fork, knife, and pen all fell and could not maintain the gripping and attraction state.

In addition, when the same evaluation was performed by using the workpiece gripping device 1 according to Example 2, the same results as with the workpiece gripping device of Example 1 were obtained. Specifically, even with the workpiece gripping device according to Example 2, it was confirmed that the fork, knife, and pen having three-dimensional shapes could be gripped by combined effect of the jamming transition and the electrostatic attraction force, whereas the gripping and attraction state could not be maintained when the electrostatic attraction force was turned off.

<Evaluation 3 of gripping force>

(Sample preparation)

The hollow bag body 3 was prepared by the same procedure as (1) to (8) of <Production of workpiece gripping device> in Example 1 described above.

Subsequently, four kinds of frame-shaped support portions (Samples D to G) having different sizes of portions corresponding to the non-contact region 14 made of a polylactic acid resin material were prepared. Samples D to G were produced by using a 3D printer (product name: Ultimaker S5 Pro Bundle manufactured by Ultimaker). Then, four assembles were prepared by attaching a double-sided adhesive tape as an adhesion layer to the upper sheet 3c side of the hollow bag body 3 in accordance with the width of the frame portion of Samples D to G, and the frame-shaped support portions (Samples D to G) were attached to respective assembles, and accordingly, evaluation workpiece gripping devices D to G were acquired.

Note that the sizes and the like of the prepared four kinds of frame-shaped support portions (Samples D to G) were as follows. Note that additionally described area ratios were calculated as follows.

(Samples D to G)

- Sample D: 170 mm × 100 mm [inner space portion corresponding to the non-contact region 14: 150 mm × 80 mm (area ratio: 70%)], thickness: 8 mm
- Sample E: 170 mm × 100 mm [inner space portion corresponding to the non-contact region 14: 130 mm × 66 mm (area ratio: 50%)], thickness: 8 mm
- Sample F: 170 mm × 100 mm [inner space portion corresponding to the non-contact region 14: 110 mm × 46 mm (area ratio: 30%)], thickness: 8 mm
- Sample G: 170 mm × 100 mm [inner space portion corresponding to the non-contact region 14: 40 mm × 44 mm (area ratio: 10%)], thickness: 8 mm

Area ratio (%) = 100 × (area of inner space portion)/(total area of frame-shaped support portion when no non-contact region 14 is assumed)

(Evaluation of gripping force)

The evaluation workpiece gripping devices D to G produced as described above were used, and a power source device (electrostatic chuck power source CTPS-3KV2AF manufactured by Aid Giken Co., Ltd., maximum output: 3kV) was prepared at the end of the power supply cable 11. In addition, an aluminum alloy (A5052) pipe having an outer diameter of $\phi$50 mm and a mass of 80 g was used as the workpiece, and the side surface of the pipe was used as a gripping surface.

First, each of the evaluation workpiece gripping devices D to G was placed on the upper surface of the workpiece (side surface of the pipe) from the lower sheet 3d surface side of the hollow bag body 3. Subsequently, as in <Evaluation 2 of gripping force> described above, the air tube 8 was connected to a vacuum pump (manufactured by Nitto Kohki Co., Ltd.), and the vacuum pump was turned On to suction the inside of the hollow bag body 3, thereby causing a jamming transition. In addition, as in <Evaluation 1 of gripping force> described above, the power source device was turned on to apply voltage to each workpiece gripping device. The voltage was applied under two conditions of ±500 V and ±1000 V. In this state, when each of the evaluation workpiece gripping devices D to G was moved and lifted upward, the workpiece was lifted while being gripped by the hollow bag body 3 in all cases.

Then, in the state in which the workpiece was gripped by each of the workpiece gripping devices D to G, weights were added into the pipe of the workpiece to increase the weight of the workpiece, and it was confirmed up to what weight in gram the workpiece could be gripped. The weight holding time was set to 10 seconds, and the weight that was held for 10 seconds was measured (number of repetition: 3).

Results are listed in Table 4 below.

[Table 4]

| Workpiece gripping device | D | | E | | F | | G | |
|---|---|---|---|---|---|---|---|---|
| Applied voltage (V) | ±500 | ±1000 | ±500 | ±1000 | ±500 | ±1000 | ±500 | ±1000 |
| Grippable weight (g) | 352 | 460 | 261 | 411 | 235 | 312 | 192 | 280 |

As indicated in the above-described results of Table 4, in the evaluation workpiece gripping devices D to G, the weight of weights that could be gripped is larger as the area ratio of the inner space portion of the frame-shaped support portions D to G is larger, and improvement in the gripping force of the workpiece gripping device was observed. In addition, differences were observed in the deformation amount (amount of sinking into the workpiece) of the hollow bag body when each of the workpiece gripping devices D to G was pressed against the workpiece, it was confirmed that the deformation amount was largest when Sample D was used, and the deformation amount (amount of sinking into the workpiece) of the hollow bag body was 8 mm approximately large than when Sample G was used.

Reference Signs List

| | |
|---|---|
| 1 | workpiece gripping device |
| 2 | frame-shaped support portion |
| 3 | hollow bag body |
| 3a | hollow bag body (support portion side) |
| 3b | hollow bag body (workpiece contact surface side) |
| 3c | upper sheet |
| 3d | lower sheet |
| $3d_1$ | first resin film |
| $3d_2$ | second resin film |
| 4 | material the state of which changes due to a jamming transition |
| 5 | adhesion layer |
| 6 | ventilation hole |
| 7 | connection component |
| 8 | tube |
| 9 | electrode |
| 9a, 9b | positive electrode or negative electrode |
| 10 | electrostatic chuck sheet |
| 11 | power supply cable |
| 12 | power supply member |
| 13 | workpiece |
| 14 | non-contact region |

Claims

1. A workpiece gripping device configured to grip a workpiece, the workpiece gripping device comprising:

a frame-shaped support portion;
a flexible and hermetically sealed hollow bag body attached to one surface of the frame-shaped support portion and accommodating, inside the hollow bag body, a material the state of which changes due to a jamming transition;
an electrostatic attraction means provided on a contact surface of the hollow bag body with the workpiece and configured to electrostatically attract the workpiece; and
a shape maintaining means configured to deform and maintain the shape of the hollow bag body in conformity with the shape of the workpiece, wherein
the hollow bag body is attached to one surface of the frame-shaped support portion in such a manner that the frame-shaped support portion and the hollow bag body each have at least a non-contact region where the frame-shaped support portion and the hollow bag body are not in contact with each other, and

during use, the workpiece is pressed against the contact surface of the hollow bag body with the workpiece and is gripped and attracted by utilizing shape maintaining due to the jamming transition and the electrostatic attraction.

2. The workpiece gripping device according to claim 1, wherein the area of the non-contact region is 30 to 85% relative to the total area of the frame-shaped support portion including the non-contact region.

3. The workpiece gripping device according to claim 1, wherein at least the contact surface of the hollow bag body with the workpiece is made of a material having a thickness of 10 to 150 $\mu$m, a tensile elastic modulus of 10 to 50 MPa, and a tensile elongation of 100 to 1000%.

4. The workpiece gripping device according to claim 1, wherein at least the contact surface of the hollow bag body with the workpiece is made of one or more materials selected from the group consisting of polyurethane, polyurethane elastomer, soft polyvinyl chloride, polyvinylidene chloride, polyolefin, and polyolefin copolymer.

5. The workpiece gripping device according to claim 1, wherein the material the state of which changes due to the jamming transition is one or more materials selected from the group consisting of a powder, a granular material, and a fluid.

6. The workpiece gripping device according to claim 1, wherein the shape maintaining means is a pressure adjusting means configured to adjust pressure inside the hollow bag body, and the inside of the hollow bag body is depressurized by the pressure adjusting means to maintain the shape.

7. The workpiece gripping device according to claim 6, wherein a ventilation hole is attached to the hollow bag body, and the pressure is adjusted by letting gas in and out through the ventilation hole.

8. The workpiece gripping device according to any one of claims 1 to 7, wherein the hollow bag body is composed of an upper sheet and a lower sheet, the upper sheet being attached to one surface of the frame-shaped support portion, the lower sheet being attached to one surface of the upper sheet by fusion or bonding, the one surface being opposite to the attached surface, and the lower sheet has a contact surface with the workpiece and includes the electrostatic attraction means.

9. The workpiece gripping device according to claim 8, wherein

the electrostatic attraction means is an electrostatic chuck, and the lower sheet is an electrostatic chuck sheet including an electrode inside, and

the electrostatic chuck sheet is formed by sequentially stacking and fusing or bonding a first resin film on an inner side of the hollow bag body, an electrode, and a second resin film on an outer side of the hollow bag body, and the second resin film has a contact surface with the workpiece.

10. The workpiece gripping device according to claim 9, wherein the first resin film and/or the second resin film has a thickness of 10 to 150 $\mu$m, a tensile elastic modulus of 10 to 50 MPa, and a tensile elongation of 100 to 1000%.

11. The workpiece gripping device according to claim 9, wherein the first resin film and/or the second resin film is made of one or more materials selected from the group consisting of polyurethane, polyurethane elastomer, soft polyvinyl chloride, polyvinylidene chloride, polyolefin, and polyolefin copolymer.

12. The workpiece gripping device according to claim 9, wherein the electrode is composed of a bipolar electrode including a positive electrode and a negative electrode and is an electrode sheet formed of a cured conductive paint and having a thickness of 30 to 100 $\mu$m.

13. The workpiece gripping device according to claim 12, wherein the electrode composed of the bipolar electrode is an electrode formed by meshing comb teeth of a pair of comb-shaped electrodes with each other in the same plane while maintaining a constant spacing.

14. The workpiece gripping device according to claim 9, wherein the electrostatic chuck sheet has a thickness of 90 to 350 $\mu$m, a tensile elastic modulus of 10 to 50 MPa, and a tensile elongation of 100 to 1000%.

[FIGURE 1]

[FIGURE 2]

[FIGURE 3]

( I )

( II )

( III )

[FIGURE 4]

EP 4 772 315 A1

[FIGURE 5]

(Fig. 5A)

(Fig. 5B)

## INTERNATIONAL SEARCH REPORT

| International application No. |
| --- |
| **PCT/JP2024/025154** |

| A. | CLASSIFICATION OF SUBJECT MATTER |
| --- | --- |

***B25J 15/08***(2006.01)i
FI:   B25J15/08 S

According to International Patent Classification (IPC) or to both national classification and IPC

| B. | FIELDS SEARCHED |
| --- | --- |

Minimum documentation searched (classification system followed by classification symbols)

B25J1/00-21/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2018-79561 A (KABUSHIKI KAISHA TOSHIBA) 24 May 2018 (2018-05-24) paragraphs [0012]-[0026], [0061], fig. 1, 12 | 1-14 |
| Y | JP 2021-117139 A (CREATIVE TECHNOLOGY CORP.) 10 August 2021 (2021-08-10) paragraphs [0011], [0016]-[0017], [0021], [0025], fig. 1, 4 | 1-14 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **12 September 2024** | **24 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/025154**

| Patent document cited in search report | | | Publication date (day/month/year) | Patent family member(s) | | | Publication date (day/month/year) |
|---|---|---|---|---|---|---|---|
| JP | 2018-79561 | A | 24 May 2018 | US | 2019/0210231 | A1 | |
| | | | | paragraphs [0024]-[0040], [0077], fig. 1, 12 | | | |
| | | | | WO | 2018/088046 | A1 | |
| | | | | CN | 109789561 | A | |
| JP | 2021-117139 | A | 10 August 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012236240 A
- JP 2021065977 A
- US 20200023527